# EUROPEAN PATENT SPECIFICATION

(11) **EP 3 963 526 B1**
(45) Date of publication and mention of the grant of the patent: **26.08.2026**
(21) Application number: 20808781.7
(22) Date of filing: 22.04.2020
(51) Int. Cl.: G06Q 10/08

(54) **COMPUTERIZED SYSTEMS AND METHODS FOR PACKAGE DELIVERY**
COMPUTERISIERTE SYSTEME UND VERFAHREN ZUR PAKETLIEFERUNG
SYSTÈMES ET PROCÉDÉS INFORMATISÉS DE LIVRAISON DE COLIS

(30) Priority: 20.05.2019 US 201916416909
(43) Date of publication of application: 09.03.2022
(73) Proprietor: Coupang Corp., Seoul 05510 (KR)
(72) Inventor: PARK, Gwang Moo, Seoul 05510 (KR); LEE, Yoon Hyung, Seoul 05510 (KR); WOO, Sang Hyun, Seoul 05510 (KR); REHN, Erik, Seoul 05510 (KR); BAI, Lianxi, Seoul 05510 (KR); KIM, Yoo Suk, Seoul 05510 (KR)
(74) Representative: Finnegan Europe LLP
(86) International application number: PCT/US2020/029293
(87) International publication number: WO 2020/236390

(56) References cited:
- JP-A- 2005 239 431
- KR-A- 20080 012 678
- KR-A- 20090 055 096
- KR-B1- 101 845 904
- US-A1- 2003 149 644
- US-A1- 2017 213 183
- US-B1- 8 560 461

## Description

### Technical Field

The present disclosure generally relates to computerized systems and methods for package delivery to fulfill customer orders. In particular, embodiments of the present disclosure relate to inventive and unconventional computerized systems, methods, and user interfaces for efficiently fulfilling customer orders and delivering packages with a reduced cycle time, while maintaining high worker efficiency at multiple zones within the fulfillment center.

### Background

Fulfillment centers (FCs) enable e-commerce merchants to outsource warehousing and shipping. Inventory management in FCs is an essential component of cultivating the best customer experience for online shoppers. Inventory management may include a number of steps ranging from receiving merchandise from sellers, stowing the received merchandise for easy picking access, packing the items, verifying the order, and package delivery. Although currently existing FCs and systems for inventory management in FCs are configured to handle large volumes of incoming and out-going merchandise, the efficiency and timeliness of the fulfillment of customer orders may be limited, partly because of inefficient practices in procuring items to fulfill an order. Delays in package delivery may cause customer dissatisfaction, and in some cases, may affect cost and profitability of the business.

With the advancement and widespread acceptance of e-commerce, Internet shopping offers a one-stop shop for all shopping needs including food, furniture, electronics, clothes, books, etc. Each online order typically comprises a combination of widely varying categories of items. Although, in currently existing order fulfillment practices, systems may be employed to obtain each individual item in the order in an efficient manner, the overall efficiency of the order delivery is limited by the ability to procure each individual item. For example, items are often stored in various sections of a FC based on a category and the packer may have to wait for the picker to pick all the items of the order before they can be packed. This may cause delays in packing and subsequent steps in the process of delivering packages to the customer, which delays throughput of the system and the efficiencies of computerized systems which control the shipping process.

In addition, the overall efficiency and throughput of an FC may be affected because although the items are picked individually, they are packed simultaneously into one container before being loaded as a package on a delivery truck. Expected or unexpected delays in packing may affect the picking efficiency if the storage spaces in which picked items are stored, are not accessible. The process of storing and shipping packages out of a FC includes a number of steps such as, receiving, stowing, picking, sorting, packing, loading, delivering, and verifying order accuracy at each of the steps. For an overall high efficiency, the individual step efficiency must also be high. For example, if the process includes 10 steps, and each step has an efficiency of above 90%, the overall efficiency is only 83.9%.

Further, currently existing FCs employ a team of workers to ensure a smooth round-the-clock operation. One of the technical challenges in a warehouse may be prompt communication of information to workers on the floor such as urgent customer orders, priority shipments, etc. Currently existing logistics and inventory management systems lack the ability to account for expected or unexpected urgency in customer orders efficiently, possibly causing customer dissatisfaction and higher associated inventory costs. Various methods and systems are known in the art. For, example, US 2003/149644 A1 discloses organizing cases of products for delivery to customers. US 8 560 461 B1 discloses a computing system for use in e.g. materials handling facility to handle packaged items.

Therefore, there is a need for implementation of improved methods and systems for efficient package delivery by singulation to reduce cycle-time and promised delivery times, while maintaining a high overall throughput and efficient utilization of resources.

### Summary

One aspect of the present disclosure is directed to a computer-implemented method for package delivery. The method may comprise receiving a customer order, generating an order identifier based on the customer order, associating each item of a plurality of items of the customer order with the order identifier, and determining an intended delivery destination for each item, a storage space associated with the intended delivery destination, and a delivery route, based on the order identifier. The method may further comprise sending, to a user-device for display, a first indication to sort, using a first sortation process, each item of the plurality of items based on the storage space associated with the intended delivery destination; receiving, from at least one user-device, a first input related to a status of the first sortation process; sending, to at least one user-device for display , a second indication to sort, using a second sortation process, each sorted item based on the delivery route that is configured to include the intended delivery destination, without regard to the status of the first sortation process; receiving, from at least one user-device, a second input related to a status of the second sortation process; sending, to at least one user-device for display, a third indication to place the sorted each item into a container associated with the delivery route, without regard to the status of the second sortation process; and sending, to at least one user-device for display, a fourth indication to deliver the placed items of the plurality of items to the intended delivery destination, without regard to a status of the other items of the plurality of items of the customer order.

Another aspect of the present disclosure is directed to a computer-implemented method for a package delivery. The method may comprise receiving a customer order, generating an order identifier based on the customer order, associating each item of a plurality of items of the customer order with the order identifier, and determining an intended delivery destination for each item, a storage space associated with the intended delivery destination, and a delivery route, based on the order identifier. The method may further comprise sending, to a user-device for display, a first indication to sort, using a first sortation process, each item of the plurality of items based on the storage space associated with the intended delivery destination; receiving, from at least one user-device, a first input related to a status of the first sortation process; sending, to at least one user-device for display , a second indication to sort, using a second sortation process, each sorted item based on the delivery route that is configured to include the intended delivery destination, without regard to the status of the first sortation process; receiving, from at least one user-device, a second input related to a status of the second sortation process; sending, to at least one user-device for display, a third indication to place the sorted each item into a container associated with the delivery route, without regard to the status of the second sortation process; receiving, from at least one user-device, a third input comprising information associated with a container identifier of the container; sending, to at least one user-device for display, a fourth indication to deliver the placed items of the plurality of items to the intended delivery destination, without regard to a status of the other items of the plurality of items of the customer order; receiving, from at least one user-device, a fourth input comprising information associated with a delivery schedule of the placed items of the plurality of items; and storing the first input, the second input, the third input, and the fourth input in a database associated with the computer-implemented system.

Yet another aspect of this disclosure is directed to a computer-implemented system for package delivery. The system may comprise a memory storing instructions, and at least one processor configured to execute the instructions to receive a customer order, generate an order identifier based on the customer order, associate each item of a plurality of items of the customer order with the order identifier, and determine an intended delivery destination for each item, a storage space associated with the intended delivery destination, and a delivery route. The processor may execute the instructions to send, to a user-device for display, a first indication to sort, using a first sortation process, each item of the plurality of items based on the storage space associated with the intended delivery destination; receive, from at least one user-device, a first input related to a status of the first sortation process; send, to at least one user-device for display , a second indication to sort, using a second sortation process, each sorted item based on the delivery route that is configured to include the intended delivery destination, without regard to the status of the first sortation process; receive, from at least one user-device, a second input related to a status of the second sortation process; send, to at least one user-device for display, a third indication to place the sorted each item into a container associated with the delivery route, without regard to the status of the second sortation process; and send, to at least one user-device for display, a fourth indication to deliver the placed items of the plurality of items to the intended delivery destination, without regard to a status of the other items of the plurality of items of the customer order.

Other systems, methods, and computer-readable media are also discussed herein.

### Brief Description of the Drawings

FIG. 1A is a schematic block diagram illustrating an exemplary embodiment of a network comprising computerized systems for communications enabling shipping, transportation, and logistics operations, consistent with the disclosed embodiments.
FIG. 1B depicts a sample Search Result Page (SRP) that includes one or more search results satisfying a search request along with interactive user interface elements, consistent with the disclosed embodiments.
FIG. 1C depicts a sample Single Display Page (SDP) that includes a product and information about the product along with interactive user interface elements, consistent with the disclosed embodiments.
FIG. 1D depicts a sample Cart page that includes items in a virtual shopping cart along with interactive user interface elements, consistent with the disclosed embodiments.
FIG. 1E depicts a sample Order page that includes items from the virtual shopping cart along with information regarding purchase and shipping, along with interactive user interface elements, consistent with the disclosed embodiments.
FIG. 2 is a diagrammatic illustration of an exemplary fulfillment center configured to utilize disclosed computerized systems, consistent with the disclosed embodiments.
FIG. 3 is a diagrammatic illustration of an exemplary computerized singulation package delivery system configured to utilize disclosed computerized systems, consistent with the disclosed embodiments.
FIG. 4 is a schematic of an exemplary process flow for singulation package delivery, consistent with the disclosed embodiments.
FIG. 5 is a schematic of an exemplary process flow for generating a representation of loading arrangement of a delivery vehicle, consistent with the disclosed embodiments.

### Detailed Description

The following detailed description refers to the accompanying drawings. Wherever possible, the same reference numbers are used in the drawings and the following description to refer to the same or similar parts. While several illustrative embodiments are described herein, modifications, adaptations and other implementations are possible. For example, substitutions, additions, or modifications may be made to the components and steps illustrated in the drawings, and the illustrative methods described herein may be modified by substituting, reordering, removing, or adding steps to the disclosed methods. Accordingly, the following detailed description is not limited to the disclosed embodiments and examples. Instead, the proper scope of the invention is defined by the appended claims.

Embodiments of the present disclosure are directed to systems and methods configured for reducing cycle time and enhancing efficiency of package delivery by individually shipping items of the same order without waiting for the remaining items, thus avoiding slowing down computerized systems and processes.

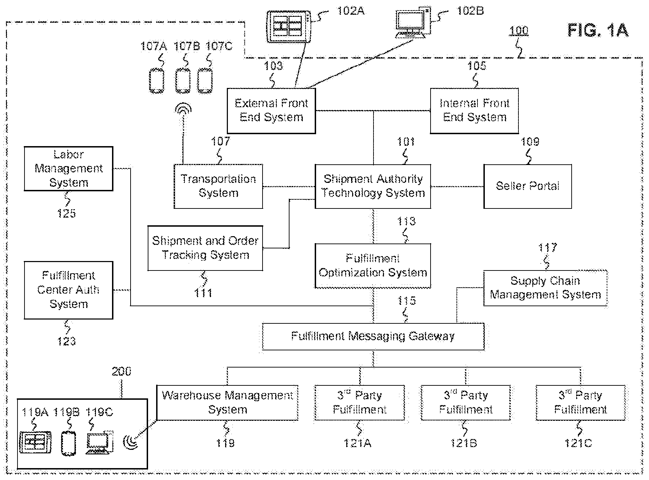

Referring to FIG. 1A, a schematic block diagram 100 illustrating an exemplary embodiment of a network comprising computerized systems for communications enabling shipping, transportation, and logistics operations is shown. As illustrated in FIG. 1A, system 100 may include a variety of systems, each of which may be connected to one another via one or more networks. The depicted systems include a shipment authority technology (SAT) system 101, an external front-end system 103, an internal front end system 105, a transportation system 107, mobile devices 107A, 107B, and 107C, seller portal 109, shipment and order tracking (SOT) system 111, fulfillment optimization (FO) system 113, fulfillment messaging gateway (FMG) 115, supply chain management (SCM) system 117, warehouse management system 119, mobile devices 119A, 119B, and 119C (depicted as being inside of fulfillment center (FC) 200), 3^{rd} party fulfillment systems 121A, 121B, and 121C, fulfillment center authorization system (FC Auth) 123, and labor management system (LMS) 125.

SAT system 101, in some embodiments, may be implemented as a computer system that monitors order status and delivery status. For example, SAT system 101 may determine whether an order is past its Promised Delivery Date (PDD) and may take appropriate action, including initiating a new order, reshipping the items in the non-delivered order, canceling the non-delivered order, initiating contact with the ordering customer, or the like. SAT system 101 may also monitor other data, including output (such as a number of packages shipped during a particular time period) and input (such as the number of empty cardboard boxes received for use in shipping). SAT system 101 may also act as a gateway between different devices in system 100, enabling communication (e.g., using store-and-forward or other techniques) between devices such as external front-end system 103 and FO system 113.

External front-end system 103, in some embodiments, may be implemented as a computer system that enables external users to interact with one or more systems in network 100. For example, in embodiments where network 100 enables the presentation of systems to enable users to place an order for an item, external front-end system 103 may be implemented as a web server that receives search requests, presents item pages, and solicits payment information. For example, external front-end system 103 may be implemented as a computer or computers running software such as the Apache HTTP Server, Microsoft Internet Information Services (IIS), NGINX, or the like. In other embodiments, external front-end system 103 may run custom web server software designed to receive and process requests from external devices (not depicted), acquire information from databases and other data stores based on those requests, and provide responses to the received requests based on acquired information.

In some embodiments, external front-end system 103 may include one or more of a web caching system, a database, a search system, or a payment system. In one aspect, external front-end system 103 may comprise one or more of these systems, while in another aspect, external front-end system 103 may comprise interfaces (e.g., server-to-server, database-to-database, or other network connections) connected to one or more of these systems.

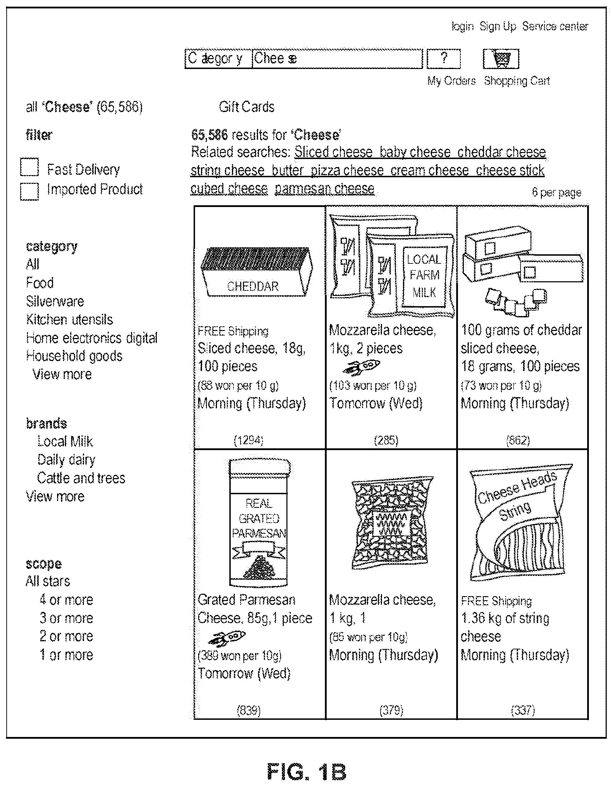

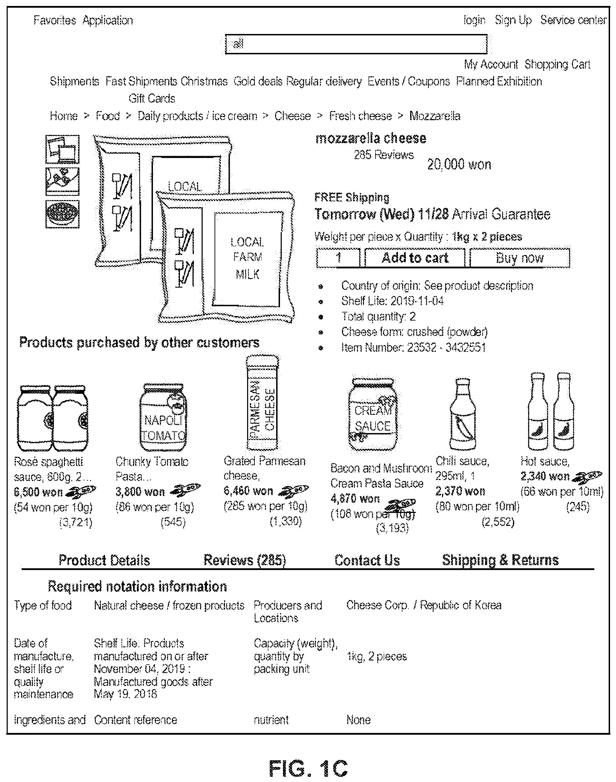

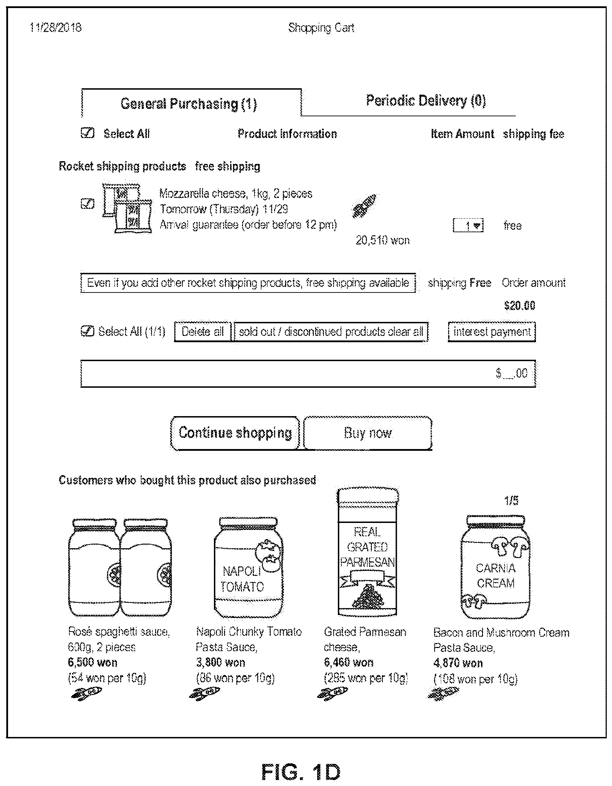

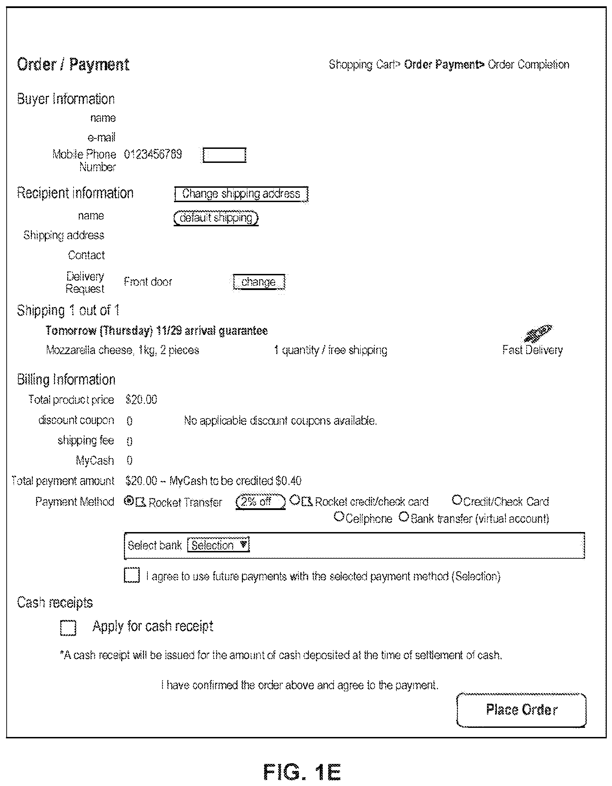

An illustrative set of steps, illustrated by FIGS. 1B, 1C, 1D, and 1E, will help to describe some operations of external front-end system 103. External front-end system 103 may receive information from systems or devices in network 100 for presentation and/or display. For example, external front-end system 103 may host or provide one or more web pages, including a Search Result Page (SRP) (e.g., FIG. 1B), a Single Detail Page (SDP) (e.g., FIG. 1C), a Cart page (e.g., FIG. 1D), or an Order page (e.g., FIG. 1E). A user device (e.g., using mobile device 102A or computer 102B) may navigate to external front-end system 103 and request a search by entering information into a search box. External front-end system 103 may request information from one or more systems in network 100. For example, external front-end system 103 may request results from FO System 113 that satisfy the search request. External front- end system 103 may also request and receive (from FO System 113) a Promised Delivery Date or "PDD" for each product returned in the search results. The PDD, in some embodiments, represents an estimate of when a package will arrive at the user's desired location if ordered within a particular period of time, for example, by the end of the day (11:59 PM). (PDD is discussed further below with respect to FO System 113.)

External front-end system 103 may prepare an SRP (e.g., FIG. 1B) based on the information. The SRP may include information that satisfies the search request. For example, this may include pictures of products that satisfy the search request. The SRP may also include respective prices for each product, or information relating to enhanced delivery options for each product, PDD, weight, size, offers, discounts, or the like. External front-end system 103 may deliver the SRP to the requesting user device (e.g., via a network).

A user device may then select a product from the SRP, e.g., by clicking or tapping a user interface, or using another input device, to select a product represented on the SRP. The user device may formulate a request for information on the selected product and send it to external front-end system 103. In response, external front-end system 103 may request information related to the selected product. For example, the information may include additional information beyond that presented for a product on the respective SRP. This could include, for example, shelf life, country of origin, weight, size, number of items in package, handling instructions, or other information about the product. The information could also include recommendations for similar products (based on, for example, big data and/or machine learning analysis of customers who bought this product and at least one other product), answers to frequently asked questions, reviews from customers, manufacturer information, pictures, or the like.

External front-system 103 may prepare an SDP (Single Detail Page) (e.g., FIG. 1C) based on the received product information. The SDP may also include other interactive elements such as a "Buy Now" button, a "Add to Cart" button, a quantity field, a picture of the item, or the like. External front-end system 103 may deliver the SDP to the requesting user device (e.g., via a network).

The requesting user device may receive the SDP which lists the product information. Upon receiving the SDP, the user device may then interact with the SDP. For example, a user of the requesting user device may click or otherwise interact with a "Place in Cart" button on the SDP. This adds the product to a shopping cart associated with the user. The user device may transmit this request to add the product to the shopping cart to external front-end system 103.

External front-end system 103 may generate a Cart page (e.g., FIG. 1D). The Cart page, in some embodiments, lists the products that the user has added to a virtual "shopping cart." A user device may request the Cart page by clicking on or otherwise interacting with an icon on the SRP, SDP, or other pages. The Cart page may, in some embodiments, list all products that the user has added to the shopping cart, as well as information about the products in the cart such as a quantity of each product, a price for each product per item, a price for each product based on an associated quantity, information regarding PDD, a delivery method, a shipping cost, user interface elements for modifying the products in the shopping cart (e.g., deletion or modification of a quantity), options for ordering other product or setting up periodic delivery of products, options for setting up interest payments, user interface elements for proceeding to purchase, or the like. A user at a user device may click on or otherwise interact with a user interface element (e.g., a button that reads "Buy Now") to initiate the purchase of the product in the shopping cart. Upon doing so, the user device may transmit this request to initiate the purchase to external front-end system 103.

External front-end system 103 may generate an Order page (e.g., FIG. 1E) in response to receiving the request to initiate a purchase. The Order page, in some embodiments, re-lists the items from the shopping cart and requests input of payment and shipping information. For example, the Order page may include a section requesting information about the purchaser of the items in the shopping cart (e.g., name, address, e-mail address, phone number), information about the recipient (e.g., name, address, phone number, delivery information), shipping information (e.g., speed/method of delivery and/or pickup), payment information (e.g., credit card, bank transfer, check, stored credit), user interface elements to request a cash receipt (e.g., for tax purposes), or the like. External front-end system 103 may send the Order page to the user device.

The user device may enter information on the Order page and click or otherwise interact with a user interface element that sends the information to external front-end system 103. From there, external front-end system 103 may send the information to different systems in network 100 to enable the creation and processing of a new order with the products in the shopping cart.

In some embodiments, external front-end system 103 may be further configured to enable sellers to transmit and receive information relating to orders.

Internal front-end system 105, in some embodiments, may be implemented as a computer system that enables internal users (e.g., employees of an organization that owns, operates, or leases network 100) to interact with one or more systems in network 100. For example, in embodiments where network 101 enables the presentation of systems to enable users to place an order for an item, internal front-end system 105 may be implemented as a web server that enables users to view diagnostic and statistical information about orders, modify item information, or review statistics relating to orders. For example, internal front-end system 105 may be implemented as a computer or computers running software such as the Apache HTTP Server, Microsoft Internet Information Services (IIS), NGINX, or the like. In other embodiments, internal front-end system 105 may run custom web server software designed to receive and process requests from devices depicted in network 100 (as well as other devices not depicted), acquire information from databases and other data stores based on those requests, and provide responses to the received requests based on acquired information.

In some embodiments, internal front-end system 105 may include one or more of a web caching system, a database, a search system, a payment system, an analytics system, an order monitoring system, or the like. In one aspect, internal front-end system 105 may comprise one or more of these systems, while in another aspect, internal front-end system 105 may comprise interfaces (e.g., server-to-server, database-to-database, or other network connections) connected to one or more of these systems.

Transportation system 107, in some embodiments, may be implemented as a computer system that enables communication between devices in network 100 and mobile devices 107A-107C. Transportation system 107, in some embodiments, may receive information from one or more mobile devices 107A-107C (e.g., mobile phones, smart phones, PDAs, or the like). For example, in some embodiments, mobile devices 107A-107C may comprise devices operated by delivery workers. The delivery workers, who may be permanent, temporary, or shift employees, may utilize mobile devices 107A-107C to effect delivery of packages ordered by users. For example, to deliver a package, the delivery worker may receive a notification on a mobile device indicating which package to deliver and where to deliver it. Upon arriving at the delivery location, the delivery worker may locate the package (e.g., in the back of a truck or in a crate of packages), scan or otherwise capture data associated with an identifier on the package (e.g., a barcode, an image, a text string, an RFID tag, or the like) using the mobile device, and deliver the package (e.g., by leaving it at a front door, leaving it with a security guard, handing it to the recipient, or the like). In some embodiments, the delivery worker may capture photo(s) of the package and/or may obtain a signature. The mobile device may send a communication to transportation system 107 including information about the delivery, including, for example, time, date, GPS location, photo(s), an identifier associated with the delivery worker, an identifier associated with the mobile device, or the like. Transportation system 107 may store this data in a database (not pictured) for access by other systems in network 100. Transportation system 107 may, in some embodiments, use this information to prepare and send tracking data to other systems indicating the location of a particular package.

In some embodiments, certain users may use one kind of mobile device (e.g., permanent workers may use a specialized PDA with custom hardware such as a barcode scanner, stylus, and other devices) while other users may use other kinds of mobile devices (e.g., temporary or shift workers may utilize off-the-shelf mobile phones and/or smartphones).

In some embodiments, transportation system 107 may associate a user with each device. For example, transportation system 107 may store a relationship between a user (represented by, e.g., a user identifier, an employee identifier, or a phone number) and a mobile device (represented by, e.g., an International Mobile Equipment Identity (IMEI), an International Mobile Subscription Identifier (IMSI), a phone number, a Universal Unique Identifier (UUID), or a Globally Unique Identifier (GUID)). Transportation system 107 may use this relationship in conjunction with data received on deliveries to analyze data stored in the database in order to determine, among other things, a location of the worker, an efficiency of the worker, or a speed of the worker.

Seller portal 109, in some embodiments, may be implemented as a computer system that enables sellers or other outside entities to electronically communicate with other aspects of information relating to orders. For example, a seller may utilize a computer system (not pictured) to upload or provide product information, order information, contact information, or the like, for products that the seller wishes to sell through system 100.

Shipment and order tracking system 111, in some embodiments, may be implemented as a computer system that receives, stores, and forwards information regarding the location of packages ordered by customers (e.g., by a user using devices 102A-102B). In some embodiments, shipment and order tracking system 111 may request or store information from web servers (not pictured) operated by shipping companies that deliver packages ordered by customers.

In some embodiments, shipment and order tracking system 111 may request and store information from systems depicted in network 100. For example, shipment and order tracking system 111 may request information from transportation system 107. As discussed above, transportation system 107 may receive information from one or more mobile devices 107A-107C (e.g., mobile phones, smart phones, PDAs, or the like) that are associated with one or more of a user (e.g., a delivery worker) or a vehicle (e.g., a delivery truck). In some embodiments, shipment and order tracking system 111 may also request information from warehouse management system (WMS) 119 to determine the location of individual packages inside of a fulfillment center (e.g., fulfillment center 200). Shipment and order tracking system 111 may request data from one or more of transportation system 107 or WMS 119, process it, and present it to a device (e.g., user devices 102A and 102B) upon request.

Fulfillment optimization (FO) system 113, in some embodiments, may be implemented as a computer system that stores information for customer orders from other systems (e.g., external front end-system 103 and/or shipment and order tracking system 111). FO system 113 may also store information describing where particular items are held or stored. For example, some items that customers order may be stored only in one fulfillment center, while other items may be stored in multiple fulfillment centers. In still other embodiments, certain fulfilment centers may be designed to store only a particular set of items (e.g., fresh produce or frozen products). FO system 113 stores this information as well as associated information (e.g., quantity, size, date of receipt, expiration date, etc.).

FO system 113 may also calculate a corresponding PDD (promised delivery date) for each product. The PDD, in some embodiments, may be based on one or more factors. For example, FO system 113 may calculate a PDD for a product based on a past demand for a product (e.g., how many times that product was ordered during a period of time), an expected demand for a product (e.g., how many customers are forecast to order the product during an upcoming period of time), a network-wide past demand indicating how many products were ordered during a period of time, a network-wide expected demand indicating how many products are expected to be ordered during an upcoming period of time, one or more counts of the product stored in each fulfillment center 200, which fulfillment center stores each product, expected or current orders for that product, or the like.

In some embodiments, FO system 113 may determine a PDD for each product on a periodic basis (e.g., hourly) and store it in a database for retrieval or sending to other systems (e.g., external front end-system 103, SAT system 101, shipment and order tracking system 111). In other embodiments, FO system 113 may receive electronic requests from one or more systems (e.g., external front-end system 103, SAT system 101, shipment and order tracking system 111) and calculate the PDD on demand.

Fulfilment messaging gateway (FMG) 115, in some embodiments, may be implemented as a computer system that receives communications from one or more systems in network 100, such as FO system 113, converts the data in the communications to another format, and forward the data in the converted format to other systems, such as WMS 119 or 3^{rd} party fulfillment systems 121A, 121B, or 121C, and vice versa.

Supply chain management (SCM) system 117, in some embodiments, may be implemented as a computer system that performs forecasting functions. For example, SCM system 117 may determine forecasted level of demand for a particular product based on, for example, based on a past demand for products, an expected demand for a product, a network-wide past demand, a network-wide expected demand, a count of products stored in each fulfillment center 200, expected or current orders for each product, or the like. In response to this determined forecasted level and the amount of each product across all fulfillment centers, SCM system 117 may generate one or more purchase orders to satisfy the expected demand for a particular product.

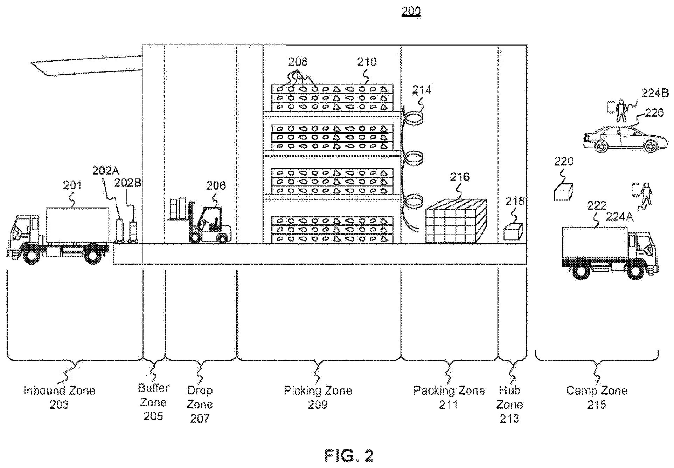

Warehouse management system (WMS) 119, in some embodiments, may be implemented as a computer system that monitors workflow. For example, WMS 119 may receive event data from individual devices (e.g., devices 107A-107C or 119A-119C) indicating discrete events. For example, WMS 119 may receive event data indicating the use of one of these devices to scan a package. As discussed below with respect to fulfillment center 200 and FIG. 2, during the fulfillment process, a package identifier (e.g., a barcode or RFID tag data) may be scanned or read by machines at particular stages (e.g., automated or handheld barcode scanners, RFID readers, high-speed cameras, devices such as tablet 119A, mobile device/PDA 119B, computer 119C, or the like). WMS 119 may store each event indicating a scan or a read of a package identifier in a corresponding database (not pictured) along with the package identifier, a time, date, location, user identifier, or other information, and may provide this information to other systems (e.g., shipment and order tracking system 111).

WMS 119, in some embodiments, may store information associating one or more devices (e.g., devices 107A-107C or 119A-119C) with one or more users associated with network 100. For example, in some situations, a user (such as a part- or full-time employee) may be associated with a mobile device in that the user owns the mobile device (e.g., the mobile device is a smartphone). In other situations, a user may be associated with a mobile device in that the user is temporarily in custody of the mobile device (e.g., the user checked the mobile device out at the start of the day, will use it during the day, and will return it at the end of the day).

WMS 119, in some embodiments, may maintain a work log for each user associated with network 100. For example, WMS 119 may store information associated with each employee, including any assigned processes (e.g., unloading trucks, picking items from a pick zone, rebin wall work, packing items), a user identifier, a location (e.g., a floor or zone in a fulfillment center 200), a number of units moved through the system by the employee (e.g., number of items picked, number of items packed), an identifier associated with a device (e.g., devices 119A-119C), or the like. In some embodiments, WMS 119 may receive check-in and check-out information from a timekeeping system, such as a timekeeping system operated on a device 119A-119C.

3^{rd} party fulfillment (3PL) systems 121A-121C, in some embodiments, represent computer systems associated with third-party providers of logistics and products. For example, while some products are stored in fulfillment center 200 (as discussed below with respect to FIG. 2), other products may be stored off-site, may be produced on demand, or may be otherwise unavailable for storage in fulfillment center 200. 3PL systems 121A-121C may be configured to receive orders from FO system 113 (e.g., through FMG 115) and may provide products and/or services (e.g., delivery or installation) to customers directly.

Fulfillment Center Auth system (FC Auth) 123, in some embodiments, may be implemented as a computer system with a variety of functions. For example, in some embodiments, FC Auth 123 may act as a single-sign on (SSO) service for one or more other systems in network 100. For example, FC Auth 123 may enable a user to log in via internal front-end system 105, determine that the user has similar privileges to access resources at shipment and order tracking system 111, and enable the user to access those privileges without requiring a second log in process. FC Auth 123, in other embodiments, may enable users (e.g., employees) to associate themselves with a particular task. For example, some employees may not have an electronic device (such as devices 119A-119C) and may instead move from task to task, and zone to zone, within a fulfillment center 200, during the course of a day. FC Auth 123 may be configured to enable those employees to indicate what task they are performing and what zone they are in at different times of day.

Labor management system (LMS) 125, in some embodiments, may be implemented as a computer system that stores attendance and overtime information for employees (including full-time and part-time employees). For example, LMS 125 may receive information from FC Auth 123, WMA 119, devices 119A-119C, transportation system 107, and/or devices 107A-107C.

The particular configuration depicted in FIG. 1A is an example only. For example, while FIG. 1A depicts FC Auth system 123 connected to FO system 113 through FMG 115, not all embodiments require this particular configuration. Indeed, in some embodiments, the systems in network 100 may be connected to one another through one or more public or private networks, including the Internet, an Intranet, a WAN (Wide-Area Network), a MAN (Metropolitan-Area Network), a wireless network compliant with the IEEE 802.11a/b/g/n Standards, a leased line, or the like. In some embodiments, one or more of the systems in network 100 may be implemented as one or more virtual servers implemented at a data center, server farm, or the like.

FIG. 2 depicts a fulfillment center 200. Fulfillment center 200 is an example of a physical location that stores items for shipping to customers when ordered. Fulfillment center (FC) 200 may be divided into multiple zones, each of which are depicted in FIG. 2. These "zones," in some embodiments, may be thought of as virtual divisions between different stages of a process of receiving items, storing the items, retrieving the items, and shipping the items. So, while the "zones" are depicted in FIG. 2, other divisions of zones are possible, and the zones in FIG. 2 may be omitted, duplicated, or modified in some embodiments.

Inbound zone 203 represents an area of FC 200 where items are received from sellers who wish to sell products using network 100 from FIG. 1. For example, a seller may deliver items 202A and 202B using truck 201. Item 202A may represent a single item large enough to occupy its own shipping pallet, while item 202B may represent a set of items that are stacked together on the same pallet to save space.

A worker will receive the items in inbound zone 203 and may optionally check the items for damage and correctness using a computer system (not pictured). For example, the worker may use a computer system to compare the quantity of items 202A and 202B to an ordered quantity of items. If the quantity does not match, that worker may refuse one or more of items 202A or 202B. If the quantity does match, the worker may move those items (using, e.g., a dolly, a handtruck, a forklift, or manually) to buffer zone 205. Buffer zone 205 may be a temporary storage area for items that are not currently needed in the picking zone, for example, because there is a high enough quantity of that item in the picking zone to satisfy forecasted demand. In some embodiments, forklifts 206 operate to move items around buffer zone 205 and between inbound zone 203 and drop zone 207. If there is a need for items 202A or 202B in the picking zone (e.g., because of forecasted demand), a forklift may move items 202A or 202B to drop zone 207.

Drop zone 207 may be an area of FC 200 that stores items before they are moved to picking zone 209. A worker assigned to the picking task (a "picker") may approach items 202A and 202B in the picking zone, scan a barcode for the picking zone, and scan barcodes associated with items 202A and 202B using a mobile device (e.g., device 119B). The picker may then take the item to picking zone 209 (e.g., by placing it on a cart or carrying it).

Picking zone 209 may be an area of FC 200 where items 208 are stored on storage units 210. In some embodiments, storage units 210 may comprise one or more of physical shelving, bookshelves, boxes, totes, refrigerators, freezers, cold stores, or the like. In some embodiments, picking zone 209 may be organized into multiple floors. In some embodiments, workers or machines may move items into picking zone 209 in multiple ways, including, for example, a forklift, an elevator, a conveyor belt, a cart, a handtruck, a dolly, an automated robot or device, or manually. For example, a picker may place items 202A and 202B on a handtruck or cart in drop zone 207 and walk items 202A and 202B to picking zone 209.

A picker may receive an instruction to place (or "stow") the items in particular spots in picking zone 209, such as a particular space on a storage unit 210. For example, a picker may scan item 202A using a mobile device (e.g., device 119B). The device may indicate where the picker should stow item 202A, for example, using a system that indicate an aisle, shelf, and location. The device may then prompt the picker to scan a barcode at that location before stowing item 202A in that location. The device may send (e.g., via a wireless network) data to a computer system such as WMS 119 in FIG. 1 indicating that item 202A has been stowed at the location by the user using device 119B.

Once a user places an order, a picker may receive an instruction on device 119B to retrieve one or more items 208 from storage unit 210. The picker may retrieve item 208, scan a barcode on item 208, and place it on transport mechanism 214. While transport mechanism 214 is represented as a slide, in some embodiments, transport mechanism may be implemented as one or more of a conveyor belt, an elevator, a cart, a forklift, a handtruck, a dolly, a cart, or the like. Item 208 may then arrive at packing zone 211.

Packing zone 211 may be an area of FC 200 where items are received from picking zone 209 and packed into boxes or bags for eventual shipping to customers. In packing zone 211, a worker assigned to receiving items (a "rebin worker") will receive item 208 from picking zone 209 and determine what order it corresponds to. For example, the rebin worker may use a device, such as computer 119C, to scan a barcode on item 208. Computer 119C may indicate visually which order item 208 is associated with. This may include, for example, a space or "cell" on a wall 216 that corresponds to an order. Once the order is complete (e.g., because the cell contains all items for the order), the rebin worker may indicate to a packing worker (or "packer") that the order is complete. The packer may retrieve the items from the cell and place them in a box or bag for shipping. The packer may then send the box or bag to a hub zone 213, e.g., via forklift, cart, dolly, handtruck, conveyor belt, manually, or otherwise.

Hub zone 213 may be an area of FC 200 that receives all boxes or bags ("packages") from packing zone 211. Workers and/or machines in hub zone 213 may retrieve package 218 and determine which portion of a delivery area each package is intended to go to, and route the package to an appropriate camp zone 215. For example, if the delivery area has two smaller sub-areas, packages will go to one of two camp zones 215. In some embodiments, a worker or machine may scan a package (e.g., using one of devices 119A-119C) to determine its eventual destination. Routing the package to camp zone 215 may comprise, for example, determining a portion of a geographical area that the package is destined for (e.g., based on a postal code) and determining a camp zone 215 associated with the portion of the geographical area.

Camp zone 215, in some embodiments, may comprise one or more buildings, one or more physical spaces, or one or more areas, where packages are received from hub zone 213 for sorting into routes and/or sub-routes. In some embodiments, camp zone 215 is physically separate from FC 200 while in other embodiments camp zone 215 may form a part of FC 200.

Workers and/or machines in camp zone 215 may determine which route and/or sub-route a package 220 should be associated with, for example, based on a comparison of the destination to an existing route and/or sub-route, a calculation of workload for each route and/or sub-route, the time of day, a shipping method, the cost to ship the package 220, a PDD associated with the items in package 220, or the like. In some embodiments, a worker or machine may scan a package (e.g., using one of devices 119A-119C) to determine its eventual destination. Once package 220 is assigned to a particular route and/or sub-route, a worker and/or machine may move package 220 to be shipped. In exemplary FIG. 2, camp zone 215 includes a truck 222, a car 226, and delivery workers 224A and 224B. In some embodiments, truck 222 may be driven by delivery worker 224A, where delivery worker 224A is a full-time employee that delivers packages for FC 200 and truck 222 is owned, leased, or operated by the same company that owns, leases, or operates FC 200. In some embodiments, car 226 may be driven by delivery worker 224B, where delivery worker 224B is a "flex" or occasional worker that is delivering on an as-needed basis (e.g., seasonally). Car 226 may be owned, leased, or operated by delivery worker 224B.

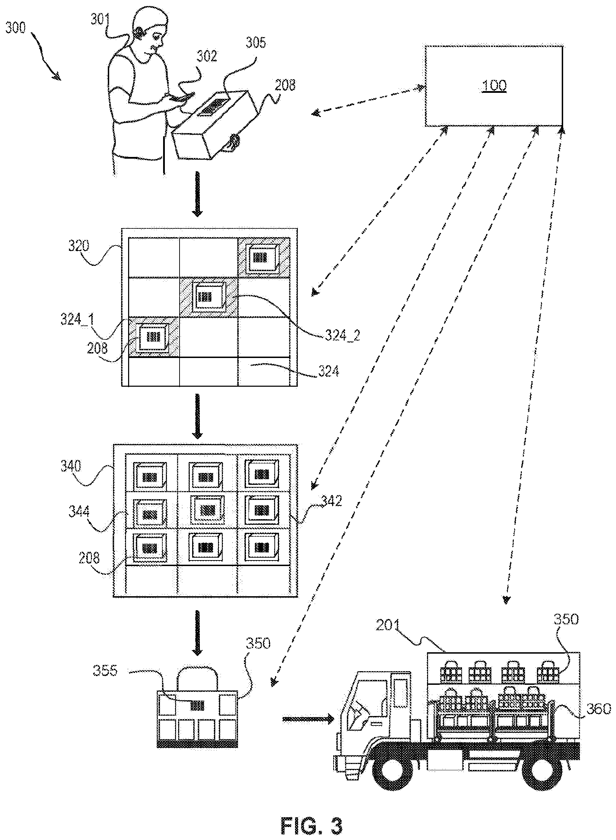

FIG. 3 illustrates an exemplary schematic of a computer-implemented system 300 for singulation package delivery. In some embodiments, system 300 may include a rebin worker 301, a picked item 208 having an order identifier 305 (e.g., a barcode, a label, a tag), a user-interface device 302 (e.g., mobile device/PDA 119B). System 300 may further include a first storage location 320 (e.g., packing zone 211) comprising storage cells 324 (e.g., 324_1, 324_2), a camp-site 340 (e.g., camp zone 215) comprising storage cells 344, and delivery truck 201. First storage location 320 and camp-site 340 may sort the items based on different information related with the eventual destination. As one example, at first storage location 320, items (e.g., item 208) may be sorted based on a geographical area that the package is destined for (e.g., based on a postal code), and at camp-site 340, items may be sorted based on a delivery route or a sub-route (e.g., based on a route number). (Other sorting methods are possible as well.) The delivery route or sub-routes may be predetermined by one or more computer implemented systems of system 100. In some embodiments, one or more systems of computer-implemented system 100 (e.g., SAT 101, WMS 119, SCM 117) may be configured to communicate user-interface device 302 to indicate sorting of items.

FIG. 3 illustrates an exemplary singulation package delivery system. The term "singulation," as used herein, refers to singular shipping of items of a customer order comprising multiple items, without waiting for the customer order to be fulfilled in entirety prior to shipping. Package delivery by singulation may have numerous advantages over the existing systems for package delivery. Package delivery by singulation may have some or all of the advantages discussed herein, among others.
**i.** Improved packing efficiency - In currently existing package delivery systems, a rebin worker may wait for all the items of an order to be packed in a single package, and the package may be placed on a rebin wall space associated with the particular order for further processing, including sorting or shipping. In contrast, in singulation package delivery system 300, the packer may sort an item individually in storage cells (e.g., 324_1) without waiting for other items of the order to arrive at the packer station or packing zone, thus reducing the idle time for packers. The reduced idle time for each packer allows for an overall enhancement in packing efficiency.
**ii.** Enhanced picking density - In currently existing package delivery systems, a picker may pick items to fulfill customer orders sequentially. For example, picker may pick all items of order 1 before picking items of order 2. This sequential approach to picking results in loss of time and efficiency because the picker spends more time transiting than picking the items. In contrast, singulation package delivery system 300 may allow for enhanced picking density because the pickers may be tasked with picking items based on their location and not based on the customer order. For example, a picker may be tasked to pick items that are located in proximity to his current physical location but may be associated with other customer orders. This parallel approach to picking may enhance picking density by reducing time spent by pickers in transit.
**iii.** Improved trackability - As illustrated in FIG. 3, in singulation package delivery system 300, a worker (e.g., worker 301) may scan a barcode (e.g., order identifier 305 and/or a location identifier) associated with a package (e.g., package 208) before initiating a process and after completion of a process. In addition, the barcode may be scanned during the process, periodically, or upon receiving a promp. The information recorded, for example, by scanning, may be stored in a database of system 100, allowing the package to be tracked as it undergoes processing. The barcode of the container or the tote bag may also be scanned, providing information associated with the location of the items contained in the container during the process of picking, sorting, packing, shipping, etc., allowing for container and package trackability.
**iv.** Faster sorting - Upon receiving the items at camp-site (e.g., camp zone 215) from packing zone, the items may be sorted based on a sub-route or a delivery route, without waiting for other items of the order to arrive at the camp-site. Because the items are sorted based on the sub-route and not on the customer order that they belong to, the shelf life of the items may be reduced, thus improving sorting rate. This may also enable better space utilization, improve worker efficiency, reduce cycle time, and enrich customer experience.
**v.** Reduced shelf-time - Singulation of items may enable reduction in the duration that an item sits on a shelf waiting to be picked, packed, sorted, or shipped because the item may be processed without regard to the status of other items of the order. The reduction in shelf-time of an item may reduce associated costs associated with inventory management and reduce the risk of item mishandling and misplacement.
**vi.** Reduced "loading preparation" time - In existing package delivery and shipping systems, employees such as workers, drivers, loaders, managers, floor supervisors, etc. may spend a significant amount of their time at the beginning of a shift or work session to, for example, ensure all items belonging to an order are loaded. Such a system may be inefficient in utilizing resources such as manpower and time, both of which may add operation costs and affect throughput. Singulation of items may reduce the loading preparation time because the employees load the containers or container carriers such as totes, cages, etc. into the delivery truck based on the planned delivery areas and delivery routes.
**vii.** Improved loading and delivery efficiency - Because the items are placed in large standardized totes or containers based on delivery routes, the delivery truck can be loaded more efficiently. Additionally, the items remain in the standardized container until delivery, thus minimizing the damage or misplacement due to handling. The large standardized totes or containers allow the loaders to follow easy directions to load the truck, and drivers to easily map the items and deliver orders more efficiently.

In some embodiments, system 100 may be configured to receive a customer order. The customer order may comprise a plurality of items. In some embodiments, each customer order may comprise a plurality of sub-orders, each of the sub-orders may comprise a plurality of items. For example, a customer order may comprise three sub-orders. The first sub-order may be an urgent order for a toothpaste, a toothbrush, and a mouthwash, the second sub-order may include a normal delivery for cheese, crackers, and chips, and the third sub-order may include a delayed delivery for a beverage. System 100 may receive the customer order and generate order identifier 305 to be associated with each of the items ordered. In some embodiments, system 100 may generate a unique sub-order identifier (e.g., sub-order identifier 305A for a first sub-order, sub-order identifier 305B for a second sub-order, and sub-order identifier 305C for a third sub-order) associated with each sub-order.

In some embodiments, order identifier 305 and sub-order identifier (e.g., 305A, 305B or 305C) may comprise information including, but not limited to, number of items ordered, urgency of the items to be delivered, destination of the items to be delivered. In some embodiments, order identifier 305 may also include information regarding the number of sub-orders within a single order. System 100 may send an indication to user-interface device 302 to indicate that an order comprises a number of sub-orders, and the urgency associated with each sub-order. The picker may fulfill the orders or the sub-orders accordingly.

In some embodiments, one or more pickers may receive the indication related to the urgency of a sub-order while retrieving items for other customer orders. Based on their current location within picking zone 209, the pickers may retrieve items of the urgent sub-order and send the items onward to packing zone 211. For example, if the urgent sub-order comprises a tooth brush and a pair of socks, the picker in or close to the oral hygiene section may retrieve the tooth brush and the picker in or close to clothing section may retrieve the pair of socks, resulting in improved picking density. The items may be transported to packing zone 211 once the container or the tote bag is full. This approach may increase picking efficiency by picking items based on the location of the pickers and not based on the customer order, thus reducing cycle time and improving overall delivery efficiency.

In some embodiments, system 100 may send instructions to a user-device (e.g., smart phone 119B, or computer 119C) to cause the device to instruct a picker to print order identifier 305. In some embodiments, the user-device may comprise a hand-held device such as a PDA, configured to print labels. Alternatively, system 100 may comprise a printing device (not pictured) such as a label printer, an inkjet printer, or a laser printer. The printing device may be configured to receive instructions from one of the computer-implemented systems of system 100 to print labels, instructions, memos, or the like. The instructions may further include requesting the picker to associate the printed order identifier 305 with an item of the customer order, for example, by affixing the printed order identifier 305 on picked item 208. In some embodiments, system 100 may be configured to associate order identifier 305 with an item of the customer order electronically. For example, system 100 may update a database comprising information related with all incoming customer orders.

Rebin worker 301 may receive picked item 208 in packing zone 211. In some embodiments, rebin worker 301 may use user-interface device 302 (e.g., smart phone 119B) to receive information associated with the customer order from system 100. User-interface device 302 may include, but not limited to, a handheld display device (e.g., tablet 119A), a smart phone (e.g., mobile device/PDA 119B), a computer (e.g., computer 119C), a body-mounted display, a head-mounted display, etc. User-interface device 302 may be substantially similar to mobile devices such as, for example, computer 119C of FIG. 1A. User-interface device 302 may communicate and exchange information with, for example, WMS 119.

In some embodiments, user-interface device 302 may be configured to display information on a user-interface display (not illustrated in FIG. 3). User-interface display may comprise information including information related with customer orders such as, number of items ordered, urgency of delivery for the items ordered, destination location of the items to be delivered, etc. In some embodiments, user-interface display may be a visual display or an audio-visual display. For example, user-interface device 302 may receive an audio-visual message to indicate a request to expedite fulfillment of an order if the order is "urgent." In some embodiments, user-interface device 302 may be configured to receive user input and provide feedback to the user through one or more interactive elements of user-interface display. For example, user-interface device 302 may provide audio, visual, or haptic notifications to the user and indicate a request to acknowledge a receipt of the notification through one or more interactive elements of the user-interface display. In some embodiments, user-interface device 302 may include data recording capabilities such as barcode scanning, optical character readers, etc. to record information of order identifier 305. User interface device 302 may be configured to temporarily store the recorded information and upload to a database of one of computer-implemented systems of system 100 at a later time. In some embodiments, user-interface device 302 may upload the recorded information to the database automatically.

In some embodiments, user-interface device 302 may receive instructions to indicate via interactive elements of user-interface display, to review order identifier 305 associated with picked item 208. For example, one of the computer-implemented systems of system 100 (e.g., WMS 119, SCM 117, or SAT 101) may generate an instruction for user-interface device 302 to display an indication for the user to start reviewing order identifier 305 associated with item 208. Reviewing order identifier 305 may comprise determining the eventual destination for delivery of item 208 by, for example, scanning or reading order identifier 305. For example, scanning order identifier (e.g., a barcode) using a barcode scanning device may display information associated with the order identifier such as eventual destination of the items in the order, urgency of the delivery, number and description of items ordered etc. In some embodiments, customer order may comprise a number of sub-orders and each sub-order may further comprise a number of items. It is appreciated that item 208 may comprise a package including one or more items of a customer order.

Upon determining the eventual destination for delivery of item 208, rebin worker 301 may place item 208 in first storage location 320 based on the determined eventual destination. First storage location 320 may comprise storage cells 324. Each storage cell 324 of first storage location 320 may be associated with a sorting location. In some embodiments, first storage location 320 may comprise a rebin wall, a storage unit, a storage rack with cells, or a cabinet. Other organized storage means may be used as well.

In some embodiments, items 208 may be sorted in storage cells 324 of first storage location 320 based on their destination without regard to the order that the item may be associated with or the status of other items of the order. In currently existing systems, the rebin worker may wait for all the items of an order to be picked before the order is sorted for delivery. In contrast, in the disclosed embodiments, each item may be treated as an individual order and sorted based on the destination without regard to the status of other items of the order. This may reduce the idle time of the rebin workers, thus increasing packing efficiency. In some embodiments, packing efficiency, as disclosed herein, may be referred to as the number of items packed in a specific time period. For example, package efficiency may be expressed as units per hour (UPH). Other efficiency metrics may be used as well. The singulation of items may also reduce the shelf-time of the items, defined herein as the duration that an item sits on a shelf before it is picked, packed, sorted, or shipped, thus reducing the costs associated with inventory management and reduce the risk of item mishandling or misplacement.

In some embodiments, each storage cell 324 may be associated with a camp-site 340. In some embodiments, camp-site 340 may be an on-site storage or sorting facility within the premises of FC 200. In some embodiments, camp-site 340 may be an off-site storage or sorting facility at a remote location. The association of each storage cell 324 (e.g., 324_1 or 324_2) with a corresponding camp site may be identified using a camp-site identifier. The camp-site identifier may include, but is not limited to, a label, a barcode, a number, or a tag. Although only a limited number of storage cells 324 are illustrated, it is appreciated that first storage location 320 may comprise any number of storage cells 324.

In some embodiments, user-interface device 302 may notify rebin worker 301, through an indication, to place item 208 in a corresponding storage cell 324 based on determining the destination location of item 208. For example, based on the customer order, one of the computer-implemented systems of system 100 (e.g., WMS 119, SCM 117, or SAT 101) may determine the camp-site to which item 208 may be directed to. Rebin worker 301 may place item 208 in the corresponding storage cell 324.

In some embodiments, rebin worker 301 may receive an indication, through user interface device 302, to associate item 208 and the corresponding storage cell 324 in which item 208 is placed. For example, rebin worker 301 may be requested to scan order identifier 305 and camp-site identifier, to establish an association between item 208 and the camp-site for sorting. The information related to order identifier of the placed item and the camp-site identifier of the storage cell where the item is placed may be updated automatically to a database comprising information related with customer orders and the delivery schedule of customer orders.

In some embodiments, if the camp-site 340 is an on-site facility, items may be transported using transportation means such as, for example, a conveyor belt, a forklift, a pallet, a trolley, or in a tote. For off-site facilities, items may be transported using a delivery truck, or the like.

In some embodiments, storage cell 324 may include one or more items to be transported to the corresponding camp-site. In some embodiments, a camp-site may be referred to as a storage location. For example, camp-site 340 may be associated with storage cell 324_1, indicating that the items (e.g., item 208) placed in storage cell 324_1 may be directed to camp-site 340.

In some embodiments, camp-site 340 may comprise one or more storage spaces 342. Storage space 342 may include, but is not limited to, a wall with storage cells, a storage unit, a storage rack with cells, or a cabinet. Other organized storage means may be used as well. For example, storage space 342 may comprise a wall with storage cells 344. Each storage cell 344 may be associated with a sub-route for delivery of item 208.

A worker at camp-site 340 may receive one or more items 208 from storage location 320. The worker (e.g., sorter) may review order identifier 305 associated with picked item 208. In some embodiments, the worker may receive a notification on user-interface device 302 to review order identifier 305. For example, one of the computer-implemented systems of system 100 (e.g., WMS 119, SCM 117, or SAT 101) may generate an indication to be displayed on user-interface device 302 for the worker to start reviewing order identifier 305 associated with item 208. Reviewing order identifier 305 may comprise determining the eventual destination of item 208.

Upon determining the eventual destination for delivery of item 208, worker may place the items (e.g., item 208) in storage cells 344 based on the determined sub-route for the eventual destination of item 208. Each storage cell 344 of camp-site 340 may be associated with a sub-route.

In some embodiments, user-interface device 302 may notify worker, through an indication, to place item 208 in a corresponding storage cell 344 based on the determined eventual destination of item 208. For example, based on the customer order, one of the computer-implemented systems of system 100 (e.g., WMS 119, SCM 117, or SAT 101) may determine the storage cell 344 to which item 208 may be directed to. Worker may place item 208 in the corresponding storage cell 324 based on the indication from user-interface device 302.

The association of each storage cell 344 with a corresponding sub-route may be identified using a sub-route identifier. The sub-route identifier may include, but is not limited to, a label, a barcode, a number, or a tag. Although only a limited number of storage cells 344 are illustrated, it is appreciated that camp-site 340 may comprise any number of storage cells 344.

In some embodiments, items may be sorted in storage cell 344 based on the determined sub-route for the eventual destination for delivery without regard to the order that the item may be associated with or the status of other items of the order. In currently existing delivery systems, the sorter may wait for all the items of an order to be received before the order is ready for delivery. In contrast, in the disclosed embodiments, each item may be treated as an individual order and sorted based on the determined sub-route for delivery without regard to the status of other items of the order. This may reduce the idle time of the sorters in camp zone, thus increasing sorting efficiency and overall package delivery efficiency.

In some embodiments, user- interface device 302 may be configured to display an indication, to associate item 208 and the corresponding storage cell 344 in which item 208 is placed. For example, the indication may comprise a request to scan order identifier 305 and sub-route identifier, to establish an association between item 208 and the sub-route for delivery. The information related to order identifier 305 of the placed item and the sub-route identifier of the storage cell 344 where the item is placed, may be updated automatically to a database comprising information related with customer orders and the delivery schedule of customer orders.

In some embodiments, each storage cell 344 may be associated with a container 350 (e.g., a tote). All items (e.g., item 208) of storage cell 344 may be placed in the container 350. In some embodiments, container 350 may be identified using a container-identifier 355. The container identifier 355 may comprise information associated with the sub-route including sub-route identifier. In some embodiments, container identifier 355 may include information related to camp-site and sub-route. For example, container identifier may comprise a label CS3_SR1, where CS indicates the origin camp-site and SR indicates the designated sub-route for delivery of items in the container. The container identifier 355 may include, but is not limited to, a label, a barcode, a number, or a tag.

In some embodiments, user-interface device 302 may be configured to display a notification or an indication, to place item 208 in a corresponding container 350 based on the determined eventual destination of item 208. For example, based on the customer order, one of the computer-implemented systems of system 100 (e.g., WMS 119, SCM 117, or SAT 101) may determine container 350 in which item 208 may be placed. Worker may place item 208 in the corresponding container 350 based on the indication from user-interface device 302.

In some embodiments, user-interface device 302 may be configured to display an indication, through one or more interactive elements of user-interface display, to associate item 208 and the corresponding container 350 in which item 208 is placed. For example, the indication may include a request to scan order identifier 305 and container identifier 355, to establish an association between item 208 and the container 350 for package delivery. The information related to order identifier 305 of the placed item 208 and container identifier 355 of container 350 where the item is placed may be updated automatically to a database comprising information related with customer orders and the delivery schedule of customer orders.

In some embodiments, one or more containers 350 may be loaded on a delivery vehicle (e.g., delivery truck 201) for delivery to customer. Containers 350 may be arranged in delivery truck 201 based on the sub-route. For example, packages or items (e.g., item 208) that are to be delivered at a destination closer to the beginning of the sub-route may be placed closer to the access door so the delivery worker can directly access the packages. In some embodiments, containers 350 comprising urgent orders may be placed closer to the access door to enable quick access of the packages. In some embodiments, the sub-route may be adjusted based on the type of orders and the urgency or PDD. In some embodiments, the sub-route and the arrangement of containers in delivery truck 201 may both be adjusted based on the customer orders and PDD.

The containers 350 may be placed on a container carrier 360 prior to loading in the delivery truck 201. The container carrier 360 may comprise a cart, a trolley, a cage, a basket, or the like. In some embodiments, container carrier 360 may comprise an identifier such as, a barcode, a label, or a tag. In some embodiments, user-interface device 302 may notify the delivery worker or the truck loader, through an indication, to place container 350 on delivery truck 201 based on a pre-determined arrangement. For example, based on the PDD, one of the computer-implemented systems of system 100 (e.g., transportation system 107) may determine the arrangement of containers 350 on container carrier 360 or arrangement of one or more container carriers 360 on delivery truck 201. Delivery worker or the truck loader may place containers 350 or container carrier 360 in delivery truck 201 based on the determination performed by one of the computer-implemented systems of system 100 (e.g., transportation system 107). User-interface device 302 may indicate, to the delivery worker or truck loader, a representation of the arrangement of containers 350 within container carrier 360 and/or the arrangement of container carriers 360 in delivery truck 201.

In some embodiments, user-interface device 302 may be configured to display a representation of the arranged containers 350 and one or more container carriers 360 in delivery truck 201. The format of the representation may comprise one of a visual, tabular, audio, audio-visual, or combinations thereof. In some embodiments, the user-interface display may comprise a representation of the arranged containers 350 and container carriers 360 in delivery truck 201 for the delivery worker.

In some embodiments, the delivery worker may receive an indication, generated by one of the computer-implemented systems of system 100, such as transportation system 107, to start driving on the sub-route after the delivery truck 201 has been loaded. The delivery worker may receive the indication through a user-interface display on user-interface device 302.

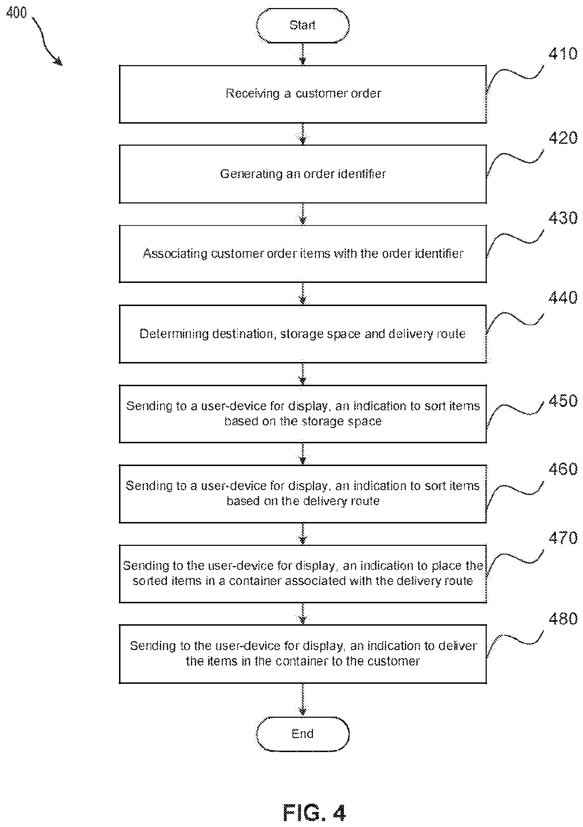

Reference is now made to FIG. 4, which illustrates an exemplary flowchart of process 400 for singulation package delivery, consistent with disclosed embodiments. The process may comprise receiving a customer order, generating an order identifier based on the customer order, determining an intended eventual destination for the items of the customer order, picking at least some of the items of the customer order, sorting the picked items based on a two-step sortation process, loading the picked items of the customer order on a delivery truck without waiting for the rest of the items of the customer order, and delivering the picked items to the customer.

The overall package delivery efficiency is a metric that relies on the efficiency of each step in the process of package shipment. Shipping packages from a FC to the customer to fulfill the orders typically involves multiple steps, and most of these steps have to be performed in a linearly subsequent order. For example, picking may be preceded by receiving an order and generating an order identifier, sorting may be preceded picking, packing may be preceded by sorting, loading the items on a delivery truck may be preceded by packing, etc. In other words, each step of the process is initiated by the completion of the previous step. In such process flows, the overall efficiency of the process is determined by the efficiency at each step. The overall efficiency may be improved by increasing the efficiency of each step, or by increasing the efficiency of at least one step while the efficiencies of other steps are maintained. As discussed above, "singulation" herein refers to the singular shipping of items of a customer order comprising multiple items without waiting for the customer order to be fulfilled in entirety prior to shipping, may improve package delivery efficiency by reducing cycle time and reducing idling time for employees involved in the process. In some embodiments, one or more steps of process 400 may be executed by one or more user-interface devices (e.g., each operated by a user in different zones of FC 200).

In step 410, one or more computer-implemented systems (e.g., WMS 119, SCM 117, SAT system 101) of system 100 may receive a customer order. The customer order may comprise a plurality of items. In some embodiments, the customer order may comprise a plurality of sub-orders and each sub-order may comprise a plurality of items. One or more computer-implemented systems of system 100 may be configured to review the customer order and identify information such as, a total number of items ordered, description of each of the items ordered, requested delivery time, eventual destination of the items, etc. In some embodiments, one or more computer-implemented systems of system 100 may determine a promised delivery date or a promised delivery time for the customer order based on at least the requested delivery time. For example, for an urgent order request from the customer, the system may determine a promised delivery time of a few hours or delivery within 24 hours to the intended eventual destination. In some embodiments, the system may be configured to determine a promised delivery date and time for each of the items of the customer order individually. For example, a customer order may comprise some items for urgent and the remaining items for normal delivery. The system may be configured to determine a promised delivery time based on the delivery type requested.

In some embodiments, one or more computer-implemented systems (e.g., WMS 119, SCM 117, SAT system 101) of system 100 may receive multiple customer orders. Each of the customer orders may comprise a plurality of items. One or more computer-implemented systems of system 100 may be configured to review and identify a common item between the multiple customer orders. A user-interface device may be configured to display an indication about the common item, requesting an input from the user, for example, a receipt confirmation. The indication may comprise information related with the description of the item, quantity of the item ordered, etc. For example, WMS 119 may receive 100 customer orders, and determine that 50 of the 100 customer orders include a common item, for example, a bottle of water. The worker (e.g., a picker) may receive an indication through the user-interface device that 50 bottles of water need to be picked. Implementation of this approach may enhance picking efficiency and overall efficiency of the process.

In step 420, one or more computer-implemented systems of system 100 may generate an order identifier (e.g., order identifier 305) based on the customer order received. The order identifier may comprise a barcode, a label, a tag, an alphanumeric code, a quick response (QR) code, or the like. The order identifier may be a machine-readable optical label that contains information about the customer order. The information contained in the order identifier may include, but is not limited to, the eventual destination of the order, total number of items in the customer order, delivery type requested, customer information, promised delivery date and promised delivery time, etc. In some embodiments, the system generating the order identifier may determine the storage location (e.g., camp zone 215, hub zone 213) and delivery route to which the items in the customer order may belong, based on the eventual destination information of the customer order. For example, based on a postal code of the eventual destination, the system may determine the storage location for the items in the customer order, and based on a street or the region identified in the eventual destination, the system may determine the delivery route for the items in the customer order.

Upon scanning or reading the order identifier, for example, using a user-interface device (e.g., user-interface device 302) equipped with barcode scanning capabilities, the user-interface device may display information associated with the order identifier. For example, upon scanning or reading the order identifier, the user-interface device may display the number of items picked, number of items remaining to be picked, a promised delivery time, and time remaining to fulfill the order.

In step 430, one or more computer-implemented systems of system 100 may instruct a user-interface device to display an indication to associate each item of the customer order with the order identifier. A user-interface device may be configured to display an indication or an alert about a received customer order, requesting an input from the user, for example, a receipt confirmation. Upon receiving the input from the user, a user-interface device may display the customer order and some or all of the information associated with the customer order. A worker (e.g., picker) may pick one or more items of the customer order and associate each picked item with the order identifier received from one or more computer-implemented systems, for example, by scanning the order identifier and the barcode on the item. In some embodiments, associating an item of the customer order with the order identifier may comprise physical printing of the order identifier using a label printer or a barcode printer. The printed label or the barcode may be, for example, attached or affixed with the item to allow easy access for all the employees to information associated with the order and delivery schedule. For example, a worker who did not receive or cannot access the original order identifier may be able to scan the printed and affixed order identifier on the item.

In step 440, one or more computer-implemented systems of system 100 may determine the intended eventual delivery destination for each of the items of the customer order. As an example, a customer may order a bouquet of flowers to be delivered to a friend's house before 8 pm and a pack of batteries to be delivered to their parent's house within 24 hours. The one or more computer-implemented systems of system 100 may generate two separate order identifiers, representing the two orders. Each of the items may be directed to a storage location and sorted into a delivery route at the storage location, based on the intended eventual destination.

In some embodiments, one or more computer-implemented systems of system 100 may determine the intended delivery destination, a storage space associated with the intended delivery destination (e.g., in storage cells 324/344), and a delivery route to deliver the items of the customer order at the intended delivery destination.

In some embodiments, the sortation process may be a two-step sortation process. The first step may comprise sorting the picked items based on a camp-site to which the item may be directed. The camp-site may be determined based on, for example, a postal code of the intended eventual delivery destination for the item in the customer order. The second step may comprise sorting the picked items in the camp-site based on a delivery route to which the item may be sent for delivery. The delivery route may be determined based on, for example, a region or a street within the area represented by a postal code.

In step 450, one or more computer-implemented systems of system 100 may send instructions to a user-interface device to display an indication or an alert to sort the picked item of the customer order based on a pre-assigned storage space (e.g., storage cells 324 of storage location 320) determined by one or more computer-implemented systems of system 100. The pre-assigned storage space may represent a camp-site to which the item may be directed for further sorting. In some embodiments, one or more storage space may be assigned a camp-site. For example, storage spaces 1-12 may be assigned for camp-site 1 represented by storage cells 324_1, and storage spaces 13-23 may be assigned for camp-site 2 represented by storage cell 324_2, and storage space 24 may be assigned for camp-site 3 represented by storage cell 324.

Each of the sorted items may be transported to the corresponding camp-sites. In some embodiments, a camp-site may be an on-site storage facility (e.g., camp zone 215) within the premises of FC 200. The sorted items may be transported to the camp zone 215 using a transportation device such as, for example, a conveyor belt, a forklift, a handtruck, a trolley, a cart. In some embodiments, a camp-site may be an off-site storage facility such as, a warehouse or a storage unit separate from FC 200. The sorted items may be transported to the off-site storage facility using, for example, a delivery truck. The sorted items belonging to a customer order may be transported to the camp-site without waiting for the rest of the items of the customer order to reduce idle time.

In step 460, one or more computer-implemented systems of system 100 may send instructions to a user-interface device to display an indication or an alert to sort the picked item in the camp-site, based on a delivery route. The delivery routes may be predetermined by one or more computer-implemented systems of system 100, based on the eventual delivery destination in the customer order. A worker may sort the picked items in the camp-site by placing the items in storage cells (e.g., storage cell 344) based on the delivery route. The worker may obtain the delivery route information by, for example, scanning the order identifier on the item. Each of the storage cell 344 may be identified by a route identifier or a sub-route identifier.

In step 470, one or more computer-implemented systems of system 100 may send instructions to a user-interface device to display an indication or an alert to place the sorted item from storage cell 344 into a container (e.g., container 350). Each storage cell 344 may be associated with a container configured to receive items stored in a corresponding storage cell. In some embodiments, each container may be identified with a container identifier comprising information identifying the camp-site and the storage cell. The picked items belonging to a customer order may be placed in the container without waiting for the rest of the items of the same customer order to reduce idle time.

The containers 350 or container carriers 360 may be loaded on a delivery vehicle (e.g., delivery truck 201) configured to receive containers, totes, wheeled cages, carts, trolleys, etc. The containers may be loaded in an arrangement based on, for example, the delivery route, in a manner so as to reduce unloading time during delivery of the items. The arrangement of containers on a delivery truck may also be based on factors including, but not limited to, urgency of the delivery, promised delivery time, whether the item is a perishable food item, etc. In some embodiments, the storage compartment of the delivery truck may include built-in storage space such as cabinets, cells, shelves, racks, cages, or wheeled cages. Each container carrier in the delivery truck may be identified by a container carrier identifier (e.g., a barcode). The container carrier identifier may include information associated with the location of the container carrier within the storage compartment of the delivery truck. For example, four container carriers 360 may be arranged against the back wall of the storage compartment, labeled as 360_1 - 360_4 going from left to right. Thus, the container carrier located in the back-left corner of the storage compartment of the delivery truck may be identified as container carrier 360_1 and the container carrier located in the back-right corner of the storage compartment of the delivery truck may be identified as container carrier 360_4. A visual or a tabular representation of the arrangement of container carriers 360 may be generated by one or more computer-implemented systems of system 100 such as transportation system 107, for example.

In some embodiments, the loading arrangement of containers on container carrier 360 may be recorded to generate a representation of the delivery truck loading arrangement. For example, transportation system 107 may send instructions to the user-interface device to display an indication to scan the container identifiers (e.g., a barcode) of all the containers placed in a container carrier and scan the corresponding container carrier identifier. The system may generate a representation of the loading arrangement based on the scanned information. In some embodiments, the loading arrangement may be presented to the user in a tabular, or a visual format. The loading arrangement may be printed on a sheet of paper, displayed on the user-interface device, or presented to the user prior to commencing their delivery rounds.

In step 480, one or more computer-implemented systems of system 100 such as transportation system 107, for example, may send instructions to a user-interface device (e.g., one of mobile devices 107A-107C) to display an indication to deliver the items stored in the containers loaded on the delivery truck. The user-interface device may display an indication requesting input from the user (e.g., delivery worker or loader) to verify completion of the loading process prior to departing for delivery of the items. The user-interface device may receive the input from the user and store the received input in a database associated with system 100.

In some embodiments, one or more computer-implemented systems of system 100 may send instructions to the user-interface device to display an indication to record the information associated with the order identifier, for example, by scanning the order identifier. The user-interface device may display an instruction to record the order identifier information after an item has been picked, after sorting the picked item based on a storage location in the first step of the sortation process, before transporting the sorted item to a camp-site, after reaching the camp-site, after sorting the picked item based on a delivery route in the second step of the sortation process, after placing the sorted items in a container, after loading the containers on a delivery truck. The information recorded at all the steps of the process may be stored and updated in a database associated with system 100 (e.g., associated with or connected to WMS 119 or transportation system 107).

In some embodiments, system 100 may generate a status update notification message in response to an inquiry from a customer about the status of the order, based on the updated information stored in the database. In some embodiments, system 100 may generate a status update notification message preemptively for the customer, based on the updated information stored in the database.

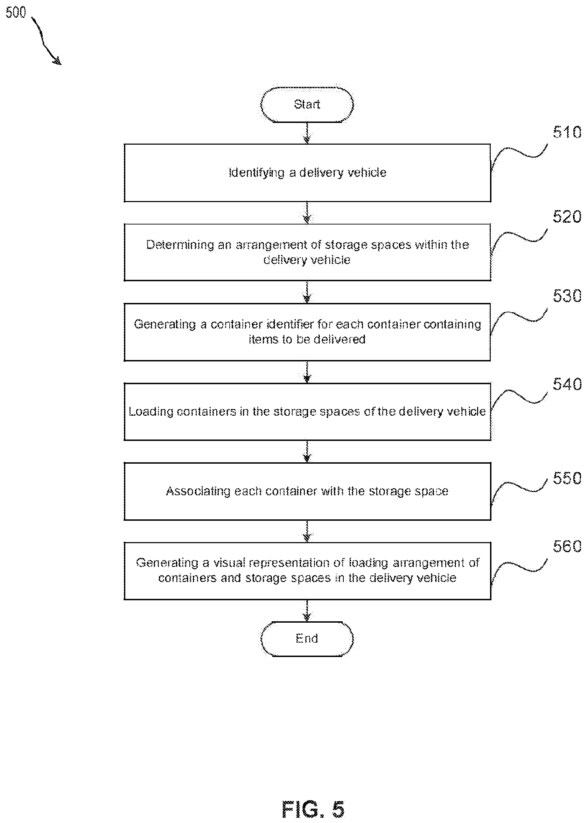

Reference is now made to FIG. 5, which illustrates an exemplary flowchart of process 500 for generating a visual representation of the loading arrangement of a delivery vehicle, consistent with disclosed embodiments. It is appreciated that the flowchart is an exemplary sequence of steps of the process, and steps may be performed in other sequences as well. Further, steps may be added, omitted, skipped, repeated, or modified based on the application and user requirements.

In step 510, one or more computer-implemented systems of system 100 may identify a delivery vehicle (e.g., delivery truck 201) comprising storage space. In some embodiments, transportation system 107 of system 100 may identify the delivery vehicle based on, for example, storage space requirements, delivery route characteristics, delivery truck worker experience or classification, or other data. For example, transportation system 107 may identify a small-sized delivery vehicle for a delivery route that has narrow roads and the delivery truck worker (e.g., truck driver) on duty may only have a valid driving permit for small-sized transportation vehicles. In some embodiments, transportation system 107 may identify the delivery vehicle based on storage space requirements. For example, if there are 20 containers full of items to be delivered on one delivery route or sub-route, the system 100 may recommend a larger delivery vehicle comprising more storage space.

In step 520, one or more computer-implemented systems such as transportation system 107 of system 100 may send instructions to the user-interface device to display an indication to determine the arrangement of storage spaces within the delivery truck. In some embodiments, the delivery truck may comprise built-in storage spaces in a storage compartment, for example, a cabinet, a rack, shelves, cages, etc. The delivery truck may comprise a storage compartment to accommodate removable storage units such as wheeled cages, for example.

In some embodiments, each storage space in the delivery truck may be identified using a storage space identifier or a container carrier identifier. The container carrier identifier may comprise a barcode, a label, a tag, or a QR code. The container carrier identifier may include information associated with the location of container carrier 360 in the storage compartment of the delivery truck. For example, four container carriers 360 may be arranged against the back wall of the storage compartment, labeled as 360_1 - 360_4 (not illustrated in FIG. 3) going from left to right. Thus, the container carrier located in the back-left corner of the storage compartment of the delivery truck may be identified as container carrier 360_1 and the container carrier located in the back-right corner of the storage compartment of the delivery truck may be identified as container carrier 360_4. In some embodiments, the delivery truck may comprise built-in storage spaces, each storage space having a storage space identifier.

In some embodiments, the delivery truck worker (e.g., driver or the loader) may record the arrangement of the built-in storage spaces in the delivery truck, for example, by scanning the storage space identifiers. In some embodiments, a database of system 100 may comprise information associated with arrangement of storage spaces in a delivery truck. For example, the database may comprise information associated with arrangement of 24 storage spaces in delivery truck 14.

In step 530, one or more computer-implemented systems such as transportation system 107 of system 100 may generate a container identifier for each container. The container identifier may comprise a barcode, a label, a tag, or a QR code. The container identifier may include information associated with at least the camp-site and the delivery route for the items contained in the container. In some embodiments, one or more containers may be assigned to a delivery route based on the number of items to be delivered along that route. The container identifier may serve as a quick reference or an indication of the eventual intended delivery destination for the items in the container.

In step 540, one or more computer-implemented systems such as transportation system 107 of system 100 may send instructions to the user-interface device to display an indication to load containers in the storage spaces of the delivery truck. The containers may be loaded on the delivery truck in a manner that may enable quick access to the items to unload during delivery.

In step 550, one or more computer-implemented systems such as transportation system 107 of system 100 may send instructions to the user-interface device to display an indication to associate each container with the storage space it is placed in. For example, transportation system 107 may send instructions to the user-interface device to display an indication to scan the container identifiers (e.g., a barcode) of all the containers placed in a storage space and scan the corresponding storage space identifier. In some embodiments, the instructions may comprise step-to-step instructions to associate the containers with the storage space and upload the information to a database of the system 100.

In step 560, one or more computer-implemented systems such as transportation system 107 of system 100 may generate a visual representation of the loading arrangement of containers and storage spaces based on the association established in step 550. In some embodiments, the loading arrangement may be presented to the user (e.g., delivery truck driver) in a tabular, or a visual format. The loading arrangement may be printed on paper, displayed on a user-interface device, or presented to the user prior to commencing their delivery rounds.

In some embodiments, the loading arrangement of the delivery truck may be displayed on a user-interface display of the delivery vehicle, for example, on a graphic user interface display screen of the delivery truck. In some embodiments, the visual representation of the loading arrangement may be updated as the deliveries are made. For example, when the delivery truck driver delivers an item to a customer and the container is empty, the display of the loading arrangement may indicate that the items in the container placed in that storage space have been delivered. This information may be updated in the database, allowing transportation system 107 and/or system 100 to determine whether the promised delivery dates and times were met.

While the present disclosure has been shown and described with reference to particular embodiments thereof, it will be understood that the present disclosure can be practiced, without modification, in other environments. The foregoing description has been presented for purposes of illustration. It is not exhaustive and is not limited to the precise forms or embodiments disclosed. Modifications and adaptations will be apparent to those skilled in the art from consideration of the specification and practice of the disclosed embodiments. Additionally, although aspects of the disclosed embodiments are described as being stored in memory, one skilled in the art will appreciate that these aspects can also be stored on other types of computer readable media, such as secondary storage devices, for example, hard disks or CD ROM, or other forms of RAM or ROM, USB media, DVD, Blu-ray, or other optical drive media.

Computer programs based on the written description and disclosed methods are within the skill of an experienced developer. Various programs or program modules can be created using any of the techniques known to one skilled in the art or can be designed in connection with existing software. For example, program sections or program modules can be designed in or by means of .Net Framework, .Net Compact Framework (and related languages, such as Visual Basic, C, etc.), Java, C++, Objective-C, HTML, HTML/AJAX combinations, XML, or HTML with included Java applets.

## Claims

1. A computer-implemented method for a package delivery, the method comprising:
receiving (410), by a computer-implemented system (100), a customer order;
generating (420), using the computer-implemented system (100), an order identifier (305) based on the customer order;
associating (430) each item of a plurality of items of the customer order with the order identifier (305);
determining (440), based on the order identifier (305), an intended delivery destination for each item, a storage space (324) associated with the intended delivery destination, and a delivery route;
sending (450), to at least one user-device (119B, 119C) for display, a first indication to sort, using a first sortation process, each item of the plurality of items based on the storage space (324) associated with the intended delivery destination;
receiving, from at least one user-device (119B, 119C), a first input related to a status of the first sortation process;
sending (460), to at least one user-device (119B, 119C) for display, a second indication to sort, using a second sortation process, each sorted item based on the delivery route that is configured to include the intended delivery destination, without regard to the status of other items of the plurality of items of the same customer order in the first sortation process;
receiving, from at least one user-device (119B, 119C), a second input related to a status of the second sortation process;
sending (470), to at least one user-device (119B, 119C) for display, a third indication to place the sorted each item into a container (350) associated with the delivery route, without waiting for rest of the plurality of items of the same customer order; and
sending (480), to at least one user-device (119B, 119C) for display, a fourth indication to deliver the placed items of the plurality of items to the intended delivery destination, without regard to a status of the other items of the plurality of items of the customer order.

2. The method of claim 1, further comprising:
picking, in response to receiving the customer order, at least one item of the plurality of items of the customer order; and
packing the at least one picked item without waiting for the other items of the plurality of items.

3. The method of claim 1, further comprising sending, to at least one user-device (119B, 119C) for display, a fifth indication to place each item in a first storage cell corresponding to the storage space (324), based on a review of the order identifier (305).

4. The method of claim 1, further comprising sending, to at least one user-device (119B, 119C) for display, a sixth indication to place each item in a second storage cell corresponding to the delivery route, based on a review of the order identifier (304).

5. The method of claim 1, further comprising loading the container (350) on a delivery vehicle (201), based on an arrangement determined by a promised delivery date for each item of the plurality of items.

6. The method of claim 1, further comprising:
receiving a plurality of customer orders;
picking, in response to receiving the plurality of customer orders, at least one common item of each of the plurality of customer orders; and
packing the at least one common item of each of the plurality of customer orders without waiting for the other items of the plurality of customer orders.

7. The method of claim 6, further comprising displaying, using at least one user-device (119B, 119C), a visual representation of a loading arrangement of the plurality of containers (350) in the delivery vehicle (201).

8. The method of claim 1, further comprising updating a database of the computer-implemented system with information related with at least one of the first sortation process, the second sortation process, placing each sorted item in the container (350), and a delivery schedule of the placed items.

9. The method of claim 1, further comprising generating a status update, by the computer-implemented system, in response to a customer inquiry related to a status of the customer order.

10. The method of claim 1, further comprising receiving, from at least one user-device (119B, 119C), an input comprising information associated with at least one of a storage space identifier, delivery route identifier, and a container identifier.

11. The method of any claims 1-5, 9 or 10 further comprising:
receiving, from at least one user-device (119B, 119C), a third input comprising information associated with a container identifier of the container (350);
receiving, from at least one user-device (119B, 119C), a fourth input comprising information associated with a delivery schedule of the placed items of the plurality of items; and
storing the first input, the second input, the third input, and the fourth input in a database associated with the computer-implemented system.

12. The method of claim 11, further comprising loading a plurality of containers on the delivery vehicle (201), wherein each of the plurality of containers comprises a plurality of items associated with a plurality of customer orders.

13. The method of claim 12, further comprising displaying, using at least one user-device (119B, 119C), a visual representation of a loading arrangement of the plurality of containers (350) in the delivery vehicle (201).

14. A computer-implemented system (100) for package delivery, the system (100) comprising:
a memory storing instructions; and
at least one processor configured to execute the instructions to:
implement a method in accordance with any preceding claim.

## Patentansprüche

1. Computerimplementiertes Verfahren für eine Paketlieferung, wobei das Verfahren Folgendes umfasst:
Empfangen (410) eines Kundenauftrags durch ein computerimplementiertes System (100);
Generieren (420) einer Auftragskennung (305) basierend auf dem Kundenauftrag unter Verwendung des computerimplementierten Systems (100);
Zuordnen (430) jedes Artikels aus einer Vielzahl von Artikeln des Kundenauftrags zu der Auftragskennung (305);
Bestimmen (440), basierend auf der Auftragskennung (305), eines beabsichtigten Lieferziels für jeden Artikel, eines Aufbewahrungsraums (324), der dem beabsichtigten Lieferziel zugeordnet ist, und einer Lieferroute;
Senden (450) einer ersten Angabe, um jeden Artikel aus der Vielzahl von Artikeln unter Verwendung eines ersten Sortiervorgangs basierend auf dem Aufbewahrungsraum (324), der dem beabsichtigten Lieferziel zugeordnet ist, zu sortieren, an mindestens eine Benutzervorrichtung (119B, 119C) zur Anzeige;
Empfangen einer ersten Eingabe, die sich auf einen Status des ersten Sortiervorgangs bezieht, von mindestens einer Benutzervorrichtung (119B, 119C);
Senden (460) einer zweiten Angabe, um jeden sortierten Artikel unter Verwendung eines zweiten Sortiervorgangs basierend auf der Lieferroute zu sortieren, die dazu konfiguriert ist, das beabsichtigte Lieferziel zu beinhalten, an mindestens eine Benutzervorrichtung (119B, 119C) zur Anzeige, ohne Rücksicht auf den Status anderer Artikel aus der Vielzahl von Artikeln desselben Kundenauftrags in dem ersten Sortiervorgang;
Empfangen einer zweiten Eingabe, die sich auf einen Status des zweiten Sortiervorgangs bezieht, von mindestens einer Benutzervorrichtung (119B, 119C);
Senden (470) einer dritten Angabe, um den sortierten jeden Artikel in einem Behälter (350) zu platzieren, welcher der Lieferroute zugeordnet ist, an mindestens eine Benutzervorrichtung (119B, 119C) zur Anzeige, ohne auf den Rest der Vielzahl von Artikeln desselben Kundenauftrags zu warten; und
Senden (480) einer vierten Angabe, um die platzierten Artikel aus der Vielzahl von Artikeln an das beabsichtigte Lieferziel zu liefern, an mindestens eine Benutzervorrichtung (119B, 119C) zur Anzeige, ohne Berücksichtigung des Status der anderen Artikel aus der Vielzahl von Artikeln des Kundenauftrags.

2. Verfahren nach Anspruch 1, ferner umfassend:
Auswählen mindestens eines Artikels aus der Vielzahl von Artikeln des Kundenauftrags als Reaktion auf das Empfangen des Kundenauftrags; und
Verpacken des mindestens einen ausgewählten Artikels, ohne auf die anderen Artikel aus der Vielzahl von Artikeln zu warten.

3. Verfahren nach Anspruch 1, ferner umfassend Senden einer fünften Angabe, um jeden Artikel basierend auf einer Überprüfung der Auftragskennung (305) in einer ersten Aufbewahrungszelle zu platzieren, die dem Aufbewahrungsraum (324) entspricht, an mindestens eine Benutzervorrichtung (119B, 119C) zur Anzeige.

4. Verfahren nach Anspruch 1, ferner umfassend Senden einer sechsten Angabe, um jeden Artikel basierend auf einer Überprüfung der Auftragskennung (304) in einer zweiten Aufbewahrungszelle zu platzieren, die der Lieferroute entspricht, an mindestens eine Benutzervorrichtung (119B, 119C) zur Anzeige.

5. Verfahren nach Anspruch 1, ferner umfassend Laden des Behälters (350) auf ein Lieferfahrzeug (201) basierend auf einer Anordnung, die durch ein versprochenes Lieferdatum für jeden Artikel aus der Vielzahl von Artikeln bestimmt wurde.

6. Verfahren nach Anspruch 1, ferner umfassend:
Empfangen einer Vielzahl von Kundenaufträgen;
Auswählen von mindestens einem gemeinsamen Artikel aus jedem der Vielzahl von Kundenaufträgen als Reaktion auf das Empfangen der Vielzahl von Kundenaufträgen; und
Verpacken des mindestens einen gemeinsamen Artikels aus jedem der Vielzahl von Kundenaufträgen, ohne auf die anderen Artikel aus der Vielzahl von Kundenaufträgen zu warten.

7. Verfahren nach Anspruch 6, ferner umfassend Anzeigen einer visuellen Darstellung einer Ladungsanordnung der Vielzahl von Behältern (350) in dem Lieferfahrzeug (201) unter Verwendung mindestens einer Benutzervorrichtung (119B, 119C).

8. Verfahren nach Anspruch 1, ferner umfassend Aktualisieren einer Datenbank des computerimplementierten Systems mit Informationen in Bezug auf mindestens eines von dem ersten Sortiervorgang, dem zweiten Sortiervorgang, dem Platzieren jedes sortierten Artikels in den Behälter (350) und einen Lieferplan der platzierten Artikel.

9. Verfahren nach Anspruch 1, ferner umfassend Generieren einer Statusaktualisierung durch das computerimplementierte System als Reaktion auf eine Kundenanfrage in Bezug auf einen Status des Kundenauftrags.

10. Verfahren nach Anspruch 1, ferner umfassend Empfangen einer Eingabe, die Informationen umfasst, die mindestens einem von einer Aufbewahrungsraumkennung, einer Lieferroutenkennung und einer Behälterkennung zugeordnet sind, von mindestens einer Benutzervorrichtung (119B, 119C).

11. Verfahren nach einem der Ansprüche 1-5, 9 oder 10, ferner umfassend:
Empfangen einer dritten Eingabe, die Informationen umfasst, die einer Behälterkennung des Behälters (350) zugeordnet sind, von mindestens einer Benutzervorrichtung (119B, 119C);
Empfangen einer vierten Eingabe, die Informationen umfasst, die einem Lieferplan der platzierten Artikel der Vielzahl von Artikeln zugeordnet sind, von mindestens einer Benutzervorrichtung (119B, 119C); und
Aufbewahren der ersten Eingabe, der zweiten Eingabe, der dritten Eingabe und der vierten Eingabe in einer Datenbank, die dem computerimplementierten System zugeordnet ist.

12. Verfahren nach Anspruch 11, ferner umfassend Laden einer Vielzahl von Behältern auf das Lieferfahrzeug (201), wobei jeder aus der Vielzahl von Behältern eine Vielzahl von Artikeln umfasst, die einer Vielzahl von Kundenaufträgen zugeordnet ist.

13. Verfahren nach Anspruch 12, ferner umfassend Anzeigen einer visuellen Darstellung einer Ladungsanordnung der Vielzahl von Behältern (350) in dem Lieferfahrzeug (201) unter Verwendung mindestens einer Benutzervorrichtung (119B, 119C).

14. Computerimplementiertes System (100) zur Paketlieferung, wobei das System (100) Folgendes umfasst:
einen Speicher, der Anweisungen aufbewahrt; und
mindestens einen Prozessor, der dazu konfiguriert ist, die Anweisungen zu Folgendem auszuführen:
Implementieren eines Verfahrens nach einem vorhergehenden Anspruch.

## Revendications

1. Procédé mis en œuvre par ordinateur pour une livraison de colis, le procédé comprenant :
la réception (410), par un système mis en œuvre par ordinateur (100), d'une commande de client ;
la génération (420), à l'aide du système mis en œuvre par ordinateur (100), d'un identifiant de commande (305) sur la base de la commande de client ;
l'association (430) de chaque article d'une pluralité d'articles de la commande de client à l'identifiant de commande (305) ;
la détermination (440), sur la base de l'identifiant de commande (305), d'une destination de livraison prévue pour chaque article, d'un espace de stockage (324) associé à la destination de livraison prévue et d'un itinéraire de livraison ;
l'envoi (450), à au moins un dispositif d'utilisateur (119B, 119C) pour affichage, d'une première indication pour trier, à l'aide d'un premier processus de tri, chaque article de la pluralité d'articles sur la base de l'espace de stockage (324) associé à la destination de livraison prévue ;
la réception, à partir d'au moins un dispositif d'utilisateur (119B, 119C), d'une première entrée liée à un statut du premier processus de tri ;
l'envoi (460), à au moins un dispositif d'utilisateur (119B, 119C) pour affichage, d'une deuxième indication pour trier, à l'aide d'un second processus de tri, chaque article trié sur la base de l'itinéraire de livraison qui est configuré pour comprendre la destination de livraison prévue, sans tenir compte du statut d'autres articles de la pluralité d'articles de la même commande de client dans le premier processus de tri ;
la réception, à partir d'au moins un dispositif d'utilisateur (119B, 119C), d'une deuxième entrée liée à un statut du second processus de tri ;
l'envoi (470), à au moins un dispositif d'utilisateur (119B, 119C) pour affichage, d'une troisième indication pour placer chaque article trié dans un conteneur (350) associé à l'itinéraire de livraison, sans attendre un reste de la pluralité d'articles de la même commande de client ; et
l'envoi (480), à au moins un dispositif d'utilisateur (119B, 119C) pour affichage, d'une quatrième indication pour livrer les articles placés de la pluralité d'articles à la destination de livraison prévue, sans tenir compte d'un statut des autres articles de la pluralité d'articles de la commande de client.

2. Procédé de la revendication 1, comprenant en outre :
le prélèvement, en réponse à la réception de la commande de client, d'au moins un article de la pluralité d'articles de la commande de client ; et
l'emballage de l'au moins un article prélevé sans attendre les autres articles de la pluralité d'articles.

3. Procédé de la revendication 1, comprenant en outre l'envoi, à au moins un dispositif d'utilisateur (119B, 119C) pour affichage, d'une cinquième indication pour placer chaque article dans une première cellule de stockage correspondant à l'espace de stockage (324), sur la base d'un examen de l'identifiant de commande (305).

4. Procédé de la revendication 1, comprenant en outre l'envoi, à au moins un dispositif d'utilisateur (119B, 119C) pour affichage, d'une sixième indication pour placer chaque article dans une seconde cellule de stockage correspondant à l'itinéraire de livraison, sur la base d'un examen de l'identifiant de commande (304).

5. Procédé de la revendication 1, comprenant en outre le chargement du conteneur (350) sur un véhicule de livraison (201), sur la base d'un agencement déterminé par une date de livraison promise pour chaque article de la pluralité d'articles.

6. Procédé de la revendication 1, comprenant en outre :
la réception d'une pluralité de commandes de client ;
le prélèvement, en réponse à la réception de la pluralité de commandes de client, d'au moins un article commun de chacune de la pluralité de commandes de client ; et
l'emballage de l'au moins un article commun de chaque commande de la pluralité de commandes de client sans attendre les autres articles de la pluralité de commandes de client.

7. Procédé de la revendication 6, comprenant en outre l'affichage, à l'aide d'au moins un dispositif d'utilisateur (119B, 119C), d'une représentation visuelle d'un agencement de chargement de la pluralité de conteneurs (350) dans le véhicule de livraison (201).

8. Procédé de la revendication 1, comprenant en outre la mise à jour d'une base de données du système mis en œuvre par ordinateur avec des informations liées à au moins l'un du premier processus de tri, du second processus de tri, du placement de chaque article trié dans le conteneur (350) et d'un programme de livraison des articles placés.

9. Procédé de la revendication 1, comprenant en outre la génération d'une mise à jour de statut, par le système mis en œuvre par ordinateur, en réponse à une demande de client liée à un statut de la commande de client.

10. Procédé de la revendication 1, comprenant en outre la réception, à partir d'au moins un dispositif d'utilisateur (119B, 119C), d'une entrée comprenant des informations associées à au moins l'un d'un identifiant d'espace de stockage, d'un identifiant d'itinéraire de livraison et d'un identifiant de conteneur.

11. Procédé de l'une quelconque des revendications 1 à 5, 9 ou 10, comprenant en outre :
la réception, à partir d'au moins un dispositif d'utilisateur (119B, 119C), d'une troisième entrée comprenant des informations associées à un identifiant de conteneur du conteneur (350) ;
la réception, à partir d'au moins un dispositif d'utilisateur (119B, 119C), d'une quatrième entrée comprenant des informations associées à un programme de livraison des articles placés de la pluralité d'articles ; et
le stockage de la première entrée, de la deuxième entrée, de la troisième entrée et de la quatrième entrée dans une base de données associée au système mis en œuvre par ordinateur.

12. Procédé de la revendication 11, comprenant en outre le chargement d'une pluralité de conteneurs sur le véhicule de livraison (201), dans lequel chacun de la pluralité de conteneurs comprend une pluralité d'articles associés à une pluralité de commandes de client.

13. Procédé de la revendication 12, comprenant en outre l'affichage, à l'aide d'au moins un dispositif d'utilisateur (119B, 119C), d'une représentation visuelle d'un agencement de chargement de la pluralité de conteneurs (350) dans le véhicule de livraison (201).

14. Système mis en œuvre par ordinateur (100) de livraison de colis, le système (100) comprenant :
une mémoire stockant des instructions ; et
au moins un processeur configuré pour exécuter les instructions pour :
mettre en œuvre un procédé selon une quelconque revendication précédente.
